# EUROPEAN PATENT APPLICATION

(11) **EP 4 186 369 A1**
(43) Date of publication of application: **31.05.2023**
(21) Application number: 21210223.0
(22) Date of filing: 24.11.2021
(51) Int. Cl.: A23C 9/13, A23C 11/06

(54) **PLANT-BASED FERMENTED DAIRY ANALOGUE COMPRISING OAT PROTEINS AND PROCESS FOR PREPARING THE SAME**

(71) Applicant: Société des Produits Nestlé S.A., 1800 Vevey (CH)
(72) Inventor: VALLE COSTA SILVA, Juliana, 1700 Fribourg (CH); MARCHESINI, Giulia, 14100 Saint-Désir (FR); RADIGUET, Sébastien, 14100 Lisieux (FR); GONZALEZ TOLEDO, Selene Yadira, 14100 Lisieux (FR)

(57) **Abstract**

The invention relates to a plant-based fermented dairy analogue comprising at least 2.0%wt oat proteins. The plant-based fermented dairy analogue has also a pH of less than 5.0 and also comprises a hydrophilic liquid and optionally a vegetable fat component. The invention also relates to a process for preparing such a plant-based fermented dairy analogue.

## Description

### TECHNICAL FIELD

The present invention relates generally to the field of plant-based fermented dairy analogue, such as plant-based yogurt analogue, comprising oat proteins. The present invention also relates to processes for producing such fermented dairy analogue comprising oat proteins.

### BACKGROUND OF THE INVENTION

Oat *(Avena sativa*) is a popular cereal which is consumed in the diet of not only animals (e.g. livestock) but also humans in many countries. For human diet, oat is a substantial source of micronutrients and macronutrients and its consumption possesses several nutritional and health benefits.

Oat comprises beneficial vitamins and phytochemicals, such as phenolic compounds. For example, oat is an abundant source of phenolic compounds named avenanthramides, which have good antioxidant properties and presumed anti-inflammatory properties.

Oat has also a significant amount of beneficial starch, in particular, slowly digestible starch (SDS) and resistant starch (RS). SDS contributes to maintain balanced blood glucose levels and improves the nutritional quality of food. As for RS, it plays a key role in digestive physiology. For example, RS provides fermentable sugar for colonic bacteria and contributes to the production of desirable metabolites in colon, such as short-chain fatty acids.

In addition, oat is especially known for being a significant source of dietary fibers, in particular, β-glucans. Oat has a β-glucan content ranging from 2.3 to 8.5 g/100g. β-glucans have prebiotic effects and promote physiological effects, such as the attenuation of sugar and cholesterol in the blood.

Oat is also a good source of proteins and beneficial fat. Moreover, in opposition to some other cereals, oats are generally gluten-free, which allows their consumption by individuals with celiac disease.

All these nutritional and health advantages have resulted in the increased interest of food companies in using oat as food ingredient in various food products such as baked goods, infant food, breakfast cereals, etc.

With the advent of flexitarian, vegetarian and vegan diets, plant-based dairy analogues, including fermented ones, have increasingly populated the retailers' shelves. Being a plant raw material and for its nutritional/health advantages, oat has quickly been considered as an ingredient of choice by food companies to prepare plant-based dairy analogues, including plant-based fermented dairy analogues.

Plant-based fermented dairy analogues are generally prepared by providing a liquid base which consists of a milk alternative and by subsequently processing said liquid base, including through fermentation, to obtain a plant-based fermented dairy analogue. Hence, the preparation of plant-based fermented dairy analogues with oat requires the transformation of oat, via chemical, physical and/or enzymatic treatments, into liquid or powder ingredients (e.g. hydrolyzed oat flour), that are suitable for the preparation of a liquid base (i.e. milk alternative). In particular, these ingredients should exhibit enhanced solubility properties in water compared to original oat in order to prepare said liquid base. This is because the major component of said liquid base is generally water and the original oat comprises substantial amount of water insoluble compounds. However, this transformation of oat, especially physical separation steps, results in ingredients which have, *inter alia,* low content of proteins which subsequently leads, due to further dilution of said oat ingredients in water, to plant-based fermented dairy analogues with poor amount of oat proteins. As a consequence, plant-based fermented dairy analogues prepared with oat available in the market have generally low amounts (i.e. less than 1.5wt.%) of proteins, in particular oat proteins.

This low amount of protein does not meet food producers' expectations. Indeed, proteins are key in plant-based fermented dairy analogues as they substantially contribute to the texture of the product by forming a gel upon fermentation. This low amount of protein results in analogues with undesirable undesirable liquid texture. To offset this lack of texture, several added texturizing agents, such as hydrocolloids, are used by food producers to achieve the desired texture. However, these added texturizing agents have lower nutritional value compared to proteins and are considered as additives, which are often avoided by some consumers.

In addition, this low amount of protein does not meet consumers' expectations. Indeed, as plant-based fermented dairy analogues are alternatives to milk-derived fermented food products, consumers expect that said plant-based fermented dairy analogues provide similar nutritional value compared to their milk-derived (i.e. dairy) counterparts. In particular, milk-derived fermented products are known to be a substantial source of protein. Hence, equivalent amount of protein is expected in plant-based fermented dairy analogues.

This nutritional drawback has been addressed by some food producers through the addition of functional plant protein ingredients, such as concentrates or isolates, which are not originated from oat but from other plant sources. For example, potato proteins or pea proteins are added to increase the amount of protein in plant-based fermented dairy analogues based on oat. However, this solution is not fully satisfactory as the major part of proteins is not originated from oat. Oat possesses some advantages compared to other plant sources. For instance, oat shows better sensory properties and higher consumer acceptance compared to other plant sources, e.g. pulses. In addition, oat proteins show a nutritional advantage compared to other cereal proteins, as they have a higher amount of lysine, which is an essential amino acid.

Alternatively, few oat protein concentrates are available in the market that may be used to enrich the protein content of food products. However, they are characterized by having poor techno-functional properties for plant-based fermented dairy analogue applications, where high protein solubility and good gelling properties are key. They also do not provide upon acidification through fermentation, plant-based fermented dairy analogues with a satisfactory sensory profile, in particular satisfactory texture. For example, the resulting plant-based fermented dairy analogues may be characterized by poor creaminess and/or undesirable liquid texture. Moreover, they exhibit undesirable destabilisation phenomena, especially strong syneresis, which negatively impact their sensory profile, in particular their texture and, as a consequence, consumer acceptance.

There is a need for plant-based fermented dairy analogue comprising a substantial amount of oat proteins while having good sensory profile, in particular a satisfactory and stable texture, including a good creaminess and low syneresis.

There is also a need for plant-based fermented dairy analogues with a good sensory profile, in particular a satisfactory and stable texture, including a good creaminess and low syneresis, wherein a major amount of the total proteins originates from oat.

There is also a need for achieving a plant-based fermented dairy analogue comprising oat proteins and with good sensory profile, in particular a satisfactory and stable texture, including a good creaminess and low syneresis, without using plant proteins other than oat proteins and/or without using added texturizing agents.

Any reference to prior art documents in this specification is not to be considered an admission that such prior art is widely known or forms part of the common general knowledge in the field.

### SUMMARY OF THE INVENTION

The object of the present invention is to improve the state of the art and, in particular, to provide a plant-based fermented dairy analogue and a process that overcomes the problems of the prior art and addresses the needs described above, or at least to provide a useful alternative.

It has been surprisingly found that the object of the present invention could be achieved by the subject matter of the independent claims. The dependent claims further develop the idea of the present invention.

A first aspect of the invention proposes a plant-based fermented dairy analogue which has a pH of less than 5.0 and which comprises a hydrophilic liquid, at least 2.0 wt% oat proteins and optionally a vegetable fat component.

A second aspect of the invention proposes a process for preparing a plant-based fermented dairy analogue comprising the steps consisting of:
(a) providing a liquid retentate comprising at least 4% oat proteins, fermentable sugars, a hydrophilic liquid matrix and optionally, a vegetable fat component,
(b) optionally, combining the liquid retentate with a hydrophilic liquid and/or fermentable sugar and/or vegetable fat component to prepare an oat-based liquid preparation comprising at least 2.0wt% oat proteins,
(c) Homogenizing the liquid retentate of step (a) or the oat-based liquid preparation of step (b) to obtain a homogenized oat-based liquid preparation,
(d) Heat treating liquid the homogenized oat-based liquid preparation at a temperature of 80 °C to 100 °C for 1 to 15 minutes to obtain a heat-treated oat liquid preparation,
(e) Inoculating the heat-treated oat-based liquid preparation with a starter culture to obtain an inoculated oat-based liquid preparation,
(f) Fermenting the oat-based liquid preparation until reaching a pH of less than 5.0 to obtain a plant-based fermented dairy analogue,
(g) Optionally, heat treating the plant-based fermented dairy analogue at a temperature of 75°C to 125°C for 2 to 90 seconds to obtain a shelf-stable plant-based fermented dairy analogue.

A third aspect of the invention proposes a plant-based fermented dairy analogue obtainable by the process of the second aspect of the invention.

The fermented dairy analogues and the process of the invention enable to provide a plant-based fermented dairy analogue comprising a substantial amount of oat proteins while having good sensory profile, in particular a satisfactory and stable texture, including a good creaminess and low syneresis. In particular, such advantages are also observed when major amount of the total proteins originates from oat. Moreover, such advantages are also observed in the absence plant proteins other than oat proteins and/or added texturizing agents.

These and other aspects, features and advantages of the invention will become more apparent to those skilled in the art from the detailed description of embodiments of the invention, in connection with the attached drawings.

### BRIEF DESCRIPTION OF THE DRAWINGS

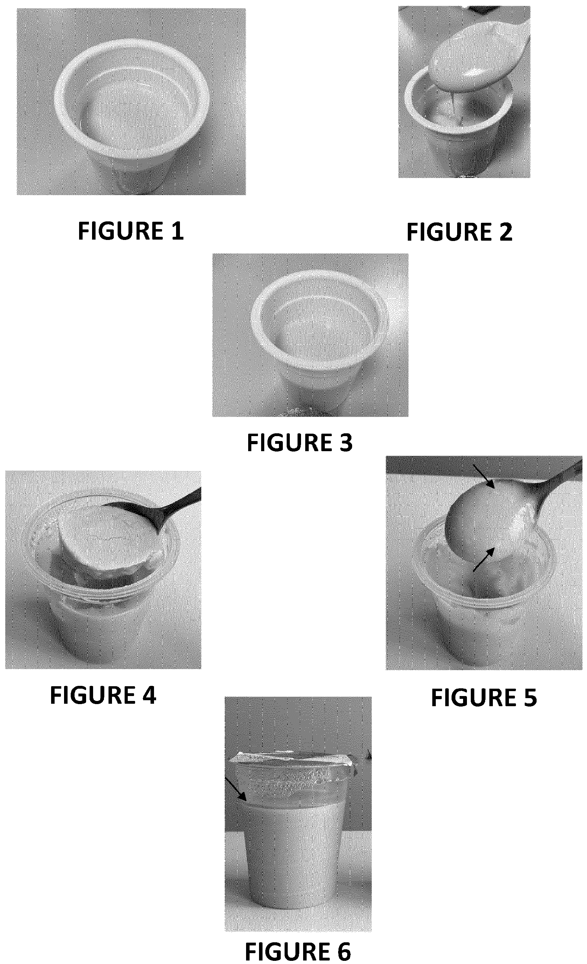

Figure 1 shows a picture of the plant-based yogurt analogue of the invention with 4% oat proteins and prepared with the liquid retentate of example 1, i.e. yogurt analogue A4% after 7 days of storage at 8°C. The texture shown in figure 1 is the texture obtained without mixing the yogurt analogue A4% with a spoon.
Figure 2 shows a picture of the texture of the yogurt analogue A4% when using a spoon after 7 days of storage at 8°C. The texture shown in figure 2 is the texture obtained after mixing the yogurt analogue A4% for 30 seconds with a spoon.
Figure 3 shows a picture of the yogurt analogue A4% after 7 days of storage at 8°C.
Figure 4 shows a picture of the reference plant-based yogurt analogue with 4% oat proteins and prepared with commercial oat protein concentrate Oatvita, i.e. yogurt analogue B4% after 7 days of storage at 8°C. The texture shown in figure 4 is the texture obtained without mixing the yogurt analogue B4% with a spoon.
Figure 5 shows a picture of the texture of the yogurt analogue B4% when using a spoon after 7 days of storage at 8°C. The texture shown in figure 5 is the texture obtained after mixing the yogurt analogue B4% for 30 seconds with a spoon. The arrows point out undesirable grains which are visible to the naked eyes.
Figure 6 shows a picture of the yogurt analogue B4% after 7 days of storage at 8°C. The arrow points out serum accumulation on the surface of yogurt analogue B4% and which results from syneresis.

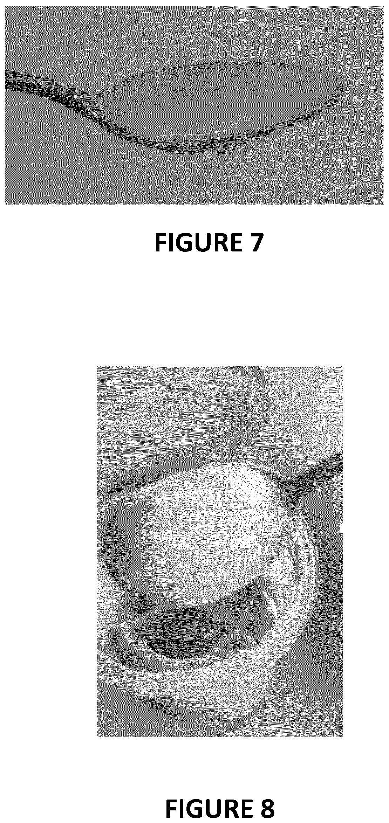

Figure 7 shows a picture of the yogurt analogue G4% when using a spoon after 7 days of storage at 8°C. The texture shown in figure 7 is the texture obtained without mixing the yogurt analogue G4% with a spoon.
Figure 8 shows a picture of the plant-based yogurt analogue of the invention with 4% oat proteins and prepared with the liquid retentate of example 1, i.e. yogurt analogue A4% after 14 days of storage. The texture shown in figure 7 is the texture obtained without mixing the yogurt analogue A2.2% with a spoon.

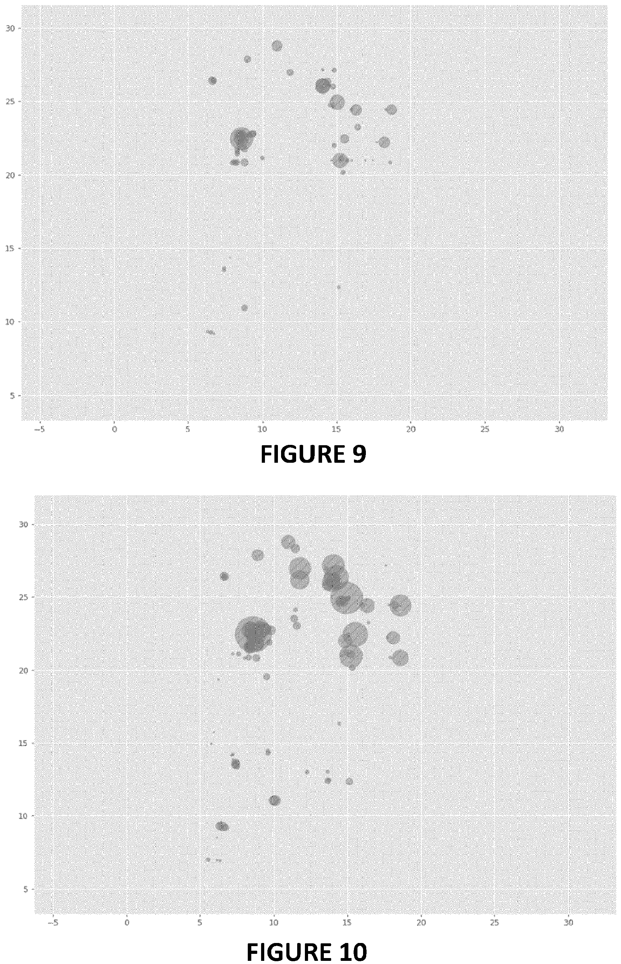

Figure 9 shows bubble chart of homogenized and heat-treated oat-based liquid preparation used to prepare yogurt analogue B4% before inoculation and fermentation. Oat proteins are separated according to their retention time (x-axis, in minutes) and mass (y-axis, in kiloDalton). Bubble areas represent summed MS signal intensities.
Figure 10 shows bubble chart of homogenized and heat-treated oat-based liquid preparation used to prepare yogurt analogue A4% before inoculation and fermentation. Oat proteins are separated according to their retention time (x-axis, in minutes) and mass (y-axis, in kiloDalton). Bubble areas represent summed MS signal intensities.

### DETAILED DESCRIPTION OF THE INVENTION

As used in the specification, the words "comprise", "comprising" and the like are to be construed in an inclusive sense, that is to say, in the sense of "including, but not limited to", as opposed to an exclusive or exhaustive sense.

As used in the specification, the word "about" should be understood to apply to each bound in a range of numerals. Moreover, all numerical ranges should be understood to include each whole integer within the range.

As used in the specification, the singular forms "a", "an", and "the" include plural referents unless the context clearly dictates otherwise.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

In the present context, the term "plant-based fermented dairy analogue" refers to a fermented edible food product comprising one or more ingredients derived from plant materials, which is free from dairy ingredients, and which mimics the texture, and also preferably the visual aspect, of fermented dairy products. Examples of fermented dairy products include fermented milk, yogurts, kefir and combinations thereof.

In the present context, the term "drinkable plant-based fermented dairy analogue" relates to a fermented dairy analogue having a flowing consistency such that it can be consumed by drinking.

In the present context, the term "spoonable plant-based fermented dairy analogue" relates to a fermented dairy analogue having a consistency (i.e., not too liquid) such that it can be consumed with a spoon.

In the present context, the term "liquid retentate" corresponds to the liquid that is liquid after a filtration step, in particular a membrane filtration step. In particular, the liquid retentate, due to its composition, in particular its protein content, may be used as a liquid oat protein concentrate and may be designated/denominated as a liquid oat protein concentrate.

In the present context, the term "fermentable sugars" refers to sugars of non-dairy origin which can be converted enzymatically into organic acids, such as lactic acid, acid acetic and the like, by starter cultures upon fermentation. Lactose is excluded from this definition.

In the present context, the term "added texturizing agents" refers to added ingredients that increase the viscosity of a food product. They may also be used to stabilize the food product. It includes pectins, gums, starches and the like. For avoidance of doubt, this definition excludes the oat proteins, fermentable sugars or hydrophilic liquids. It also excludes the inherent texturizing agents that could be inherently present in the ingredients of the plant-based fermented dairy analogue.

In the present context, the term "shelf life" refers to the period of time after production of a food product, during which the food product is transported and stored in retailers' or consumers' shelves before consumption.

In the present context, the "syneresis" corresponds to a destabilization phenomenon consisting of the separation of a liquid, also called serum, from the gel obtained in the final fermented dairy analogue. Syneresis is undesirable as it negatively impacts the sensory profile and the visual aspect of the plant-based fermented dairy analogue.

In a first aspect, the invention relates to a plant-based fermented dairy analogue. The plant-based fermented dairy analogue may be a drinkable or a spoonable plant-based fermented dairy analogue. In particular, the plant-based fermented dairy analogue is selected from the group consisting of fermented milk analogue, yogurt analogue, kefir analogue, and combinations thereof. Preferably, the plant-based fermented dairy analogue is a spoonable plant-based fermented dairy analogue. In particular, the plant-based fermented dairy analogue is spoonable and is selected from the group consisting of yogurt analogue, kefir analogue, skyr analogue, cottage cheese analogue, fresh cheese analogues and combinations thereof. More preferably, the plant-based fermented dairy analogue is a spoonable yogurt analogue.

In an embodiment, the plant-based fermented dairy analogue may be a chilled plant-based fermented dairy analogue. By "chilled", it is understood a plant-based fermented dairy analogue which has a shelf-life of several days when stored under chilled conditions. The term "chilled conditions" refers to temperatures ranging from 2°C to 15° C, preferably from 4°C to 8°C. Especially, a chilled plant-based fermented dairy analogue has a shelf-life of at least 25 days, preferably of at least 30 days when stored under chilled conditions. These storage temperatures relate to the storage of the product before being commercially obtained by an end consumer. Generally, the end consumer is advised to store the product under the same chilled conditions until consumption, for example in a refrigerator. This extended shelf-life under chilled conditions is generally obtained through a pasteurization step before fermentation. The pasteurization step is for example performed by heat-treating the oat-based liquid preparation used to prepare the plant-based fermented dairy analogue at a temperature of 80 °C to 100 °C for 1 to 15 minutes.

In another embodiment, the plant-based fermented dairy analogue may be a shelf-stable plant-based fermented dairy analogue. By "shelf-stable", it is understood a plant-based fermented dairy analogue which has a shelf-life of several months when stored under ambient conditions and/or chilled conditions. The term "ambient conditions" refers to temperatures ranging from 15°C to 25° C, preferably from 20°C to 22°C. Especially, a shelf-stable plant-based fermented dairy analogue has a shelf-life of at least 3 months, preferably of at least 6 months when stored under ambient conditions. These storage temperatures relate to the storage of the product before being commercially obtained by an end consumer. Generally, the end consumer is advised to store the product under the same ambient conditions until consumption, for example in a shelf at room temperature. This extended shelf-life under ambient conditions is generally obtained through a sterilization step after fermentation. The sterilization step is for example performed by heat-treating the plant-based fermented dairy analogue obtained after fermentation at a temperature of 80 °C to 100 °C for 1 to 15 minutes.

In an embodiment, the plant-based fermented dairy analogue can comprise a starter culture. By "non-dairy starter culture", it is understood one or more food-grade microorganisms which are suitable for fermenting a food substrate and are free from dairy ingredients. They may also be used as probiotic, i.e. to impart health benefits in the consumers upon consumption, such as health benefits for the gut. Preferably, the non-dairy starter culture comprises at least one lactic acid-producing bacteria. Especially, the lactic acid-producing bacteria is selected from the group consisting of *Lactobacillus, Lacticaseibacillus, Lactiplantibacillus, Leuconostoc, Pediococcus, Lactococcus, Streptococcus, Bifidobacterium, Carnobacterium, Oenococcus, Sporolactobacillus, Tetragenococcus, Vagococcus, Weissella,* and a combination thereof, preferably selected from the group consisting of *Lactobacillus, Lacticaseibacillus, Lactiplantibacillus, Lactococcus, Streptococcus, Bifidobacterium* and a combination thereof, further preferably selected from the group consisting of *Lactobacillus, Lacticaseibacillus, Lactiplantibacillus, Streptococcus, Bifidobacterium* and a combination thereof, most preferably selected from the group consisting of *Streptococcus, Lactobacillus,* and a combination thereof.

In a more specific embodiment, the lactic acid-producing bacteria is selected from the list consisting of *Lactobacillus acidophilus, Lactobacillus delbrueckii subsp. bulgaricus, Lacticaseibacillus paracasei, Lacticaseibacillus casei, Lacticaseibacillus rhamnosus, Lactiplantibacillus plantarum, Lactobacillus johnsonii, Lactobacillus sporogenes (or bacillus coagulans), Streptococcus thermophilus, Lactococcus lactis subsp. lactis, Lactococcus lactis subsp. cremoris (ot,* strains from the genus *Bifidobacterium* and mixtures thereof.

In an embodiment, the non-dairy starter culture may further comprise, in addition to the lactic acid-producing bacteria, at least one yeast and/or at least one acetic acid-producing bacteria. Preferably, the yeast is selected from the group consisting of *Zygosaccharomyces, Candida, Kloeckera*/*Hanseniaspora, Torulaspora, Pichia, Brettanomyces*/*Dekkera, Saccharomyces, Lachancea, Saccharomycoides, Schizosaccharomyces Kluyveromyces* and mixtures thereof. More preferably, the yeast is selected from the list consisting of *Saccharomyces, Kluyveromyces* and mixtures thereof. Preferably, the acetic acid-producing bacteria is selected from the group consisting of *Acetobacter* and *Gluconacetobacter.* These strains, in addition to lactic acid-producing strain, are for example used to produce dairy kefirs. Hence, by using these strains, the plant-based fermented dairy analogue of the invention can, for example, even more mimic dairy kefirs.

In a preferred embodiment, the non-dairy starter culture consists only of one or more lactic acid-producing bacteria. Preferably, the at least one non-dairy starter culture consists of one or more thermophilic lactic acid-producing bacteria strains. The term "thermophilic lactic acid-producing bacteria strains" refers to lactic acid-producing bacteria strains having an optimal growth at a temperature between 35°C and 45°C. More preferably, the starter culture is selected among the list consisting of *Lactobacillus delbrueckii subsp. bulgaricus, Lacticaseibacillus paracasei, Lactobacillus acidophilus, Streptococcus thermophilus, Bifidobacterium species* and a combination thereof. Most preferably, the starter consists of a combination of *Lactobacillus delbrueckii subsp. bulgaricus* and *Streptococcus thermophilus.* Especially, *Lactobacillus delbrueckii subsp. bulgaricus* and *Streptococcus thermophilus* are the two staple strains that are used in dairy yogurts. Hence, by using these strains, the plant-based fermented dairy product analogues of the invention can even more mimic dairy yogurts.

In a particular embodiment, the starter culture is in a living form in the plant-based fermented dairy product analogues. This is generally the case in the chilled plant-based fermented dairy product analogues. This could also be the case in the shelf-stable plant-based fermented dairy product analogues if at least part of the starter culture is added after the heat treatment step which is subsequent the fermentation step, i.e., after the sterilization step.

In another particular embodiment, the starter culture is in a non-living form in the plant-based fermented dairy product analogues. This is generally the case in the shelf-stable plant-based fermented dairy product analogues. Indeed, the starter culture used for fermentation is subsequently killed during the sterilization step after fermentation.

In a further embodiment, the plant-based fermented dairy analogue comprises fermentation-derived organic acids. Fermentation-derived organic acids are organic acids which are obtained from the enzymatic conversion of fermentable sugars by the starter culture during fermentation. Fermentation-derived organic acids exclude organic acids which are only added to the plant-based fermented dairy analogue and which are not obtained through fermentation of the ingredients of the plant-based fermented dairy analogue. In particular, the fermentation-derived organic acids include lactic acid. The plant-based fermented dairy analogue comprises at least 0.3g lactic acid per 100g of plant-based fermented dairy analogue, preferably from 0.3g to 1.0g lactic acid per 100g of plant-based fermented dairy analogue, more preferably from from 0.3g to 0.5g lactic acid per 100g of plant-based fermented dairy analogue. The fermentation-derived organic acids may also include acetic acid.

Due to the formation of organic acids during fermentation, the plant-based fermented dairy analogue has an acidic pH, i.e. a pH of less than 5.0, preferably less than 4.6. More preferably, the plant-based fermented dairy analogue has a pH ranging from 3.0 to 5.0, even more preferably from 3.5 to 4.6.

The formation of organic acids and the decrease in pH during the fermentation step promotes the formation of a gel with a sufficient consistency by, *inter alia,* the aggregation of the plant proteins, in particular oat proteins, into a network including plant proteins, in particular oat proteins. The consistency of the obtained gel mimics the consistency of standard fermented dairy products, such as yogurts.

The plant-based fermented dairy analogue also comprises a hydrophilic liquid. This hydrophilic liquid forms the matrix of the plant-based fermented dairy analogue. By "hydrophilic liquid", it is understood a liquid or semi-liquid composition which comprises at least 50% water, preferably at least 60% water, more preferably at least 70% water. In particular, the hydrophilic liquid is not derived from milk. For example, milk, dairy creams, are excluded from this definition. In a preferred embodiment, the hydrophilic liquid consists of water and/or plant-based milk alternative and/or plant-based cream alternative. Examples of plant-based milk alternative include almond milk, cashew milk, coconut milk, hazelnut milk, flaxseed milk, lupine milk, oat milk, pea milk, peanut milk, pine nut milk, rice milk, sesame seed milk, soybean milk, sunflower seed milk, walnut milk and mixtures thereof. Examples of plant-based cream alternative include almond cream, cashew cream, coconut cream, hazelnut cream, oat cream, peanut cream and mixtures thereof.

The plant-based fermented dairy analogue also comprises at least 2.0wt.% oat proteins. Alternatively, the plant-based fermented dairy analogue may comprise at least 2.5wt%, at least 3.0wt% oat proteins. Preferably, the plant-based fermented dairy analogue comprises 2.0wt% to 10wt% oat proteins, more preferably 2.0 to 8.0wt%, most preferably 3.0wt% to 5.0wt% oat proteins.

It has been discovered that it is possible to achieve a plant-based fermented dairy analogue with a significant amount of oat proteins, i.e. above 2wt.%, while having a good sensory profile. In particular, upon fermentation, the oat proteins aggregate and contribute to the formation of a network including said oat proteins. This results in a plant-based fermented dairy analogue with a satisfactory texture, including a good creaminess and with a stable texture, including low syneresis. The plant-based fermented dairy analogue does not have an undesirable texture which is excessively liquid or excessively thick.

In an embodiment, the oat proteins are not ultrasonicated oat proteins. By "ultrasonicated", it is understood proteins which have been obtained/treated by ultrasonication. Ultrasonication is a physical treatment involving the application of ultrasounds onto a product, such as a food product or a food ingredient. Ultrasonication is generally performed by applying on the targeted product low frequency ultrasound with high power, such as 10-100 kHz and 10-1000 W/cm2. Ultrasonication entails several drawbacks. In particular, ultrasonication can lead to denaturation and oxidation of the proteins. This may negatively impact the techno-functionality and the sensory of the proteins. In addition, ultrasonication may be expensive and hard to implement at an industrial scale. Moreover, ultrasonication may raise some food safety issues. For example, the metallic tip of ultrasonication equipment may be subjected to erosion over time so that metal residues may be present in the food product/ingredient treated with ultrasonication.

The plant-based fermented dairy analogue is free from dairy ingredients and from ingredients derived from animals, e.g. eggs, meat, squid ink etc. In particular, the proteins of the plant-based fermented dairy analogue consist only of plant proteins. In an embodiment, the plant-based fermented dairy analogue may comprise, in addition to the oat proteins, plant proteins other than oat proteins. The plant proteins other than oat proteins may be selected from the list consisting of pulse proteins, non-oat cereal proteins, nut proteins, oilseed proteins and mixtures thereof. The pulse proteins may be selected from the group consisting of bean proteins, chickpea proteins, fava bean proteins, lentil proteins, lupine proteins, pea proteins and mixtures thereof. The non-oat cereal proteins may be selected from the group consisting of maize proteins, rice proteins, wheat proteins and mixtures thereof. The nut proteins may be selected from the group consisting of almond proteins, cashew proteins, coconut proteins, hazelnut proteins, peanut proteins, pine nut proteins, walnut proteins and mixtures thereof. The oilseed proteins may be selected from the group consisting of flaxseed proteins, sesame seed proteins, sunflower seed proteins, soybean proteins and mixtures thereof. The plant proteins other than oat proteins may be originated from the hydrophilic liquid of the plant-based fermented dairy analogue, from a plant protein-containing flour, a protein concentrate or a protein isolate.

In a preferred embodiment, the oat proteins are the major proteins in the plant-based fermented dairy analogue. The above-mentioned advantages for the plant-based fermented dairy analogue in terms of sensory, in particular texture, are also observed when oat proteins are the majority proteins. In particular, the total protein content of the plant-based fermented dairy analogue comprises at least 60wt%, preferably at least 80wt%, more preferably at least 90wt% oat proteins.

In a more preferred embodiment, the proteins of the plant-based fermented dairy analogue consist only of oat proteins. The above-mentioned advantages for the plant-based fermented dairy analogue in terms of sensory, in particular texture, are also observed when oat proteins are used alone. It has been discovered that it was possible to achieve a plant-based fermented dairy analogue which is only based on oat proteins. In this embodiment, the hydrophilic liquid is a hydrophilic liquid free from any proteins, e.g. water, or is a liquid comprising proteins consisting only of oat proteins, e.g. oat milk, oat cream, the hydrophilic liquid matrix of the liquid retentate. Details regarding the liquid retentate are provided below.

The plant-based fermented dairy analogue optionally comprises a vegetable fat component. The vegetable fat component participates into the creaminess of the plant-based fermented dairy analogue. A satisfactory creaminess is obtained even in the absence of such vegetable fat component. The vegetable fat component is preferably a vegetable oil. The vegetable oil is selected among the list consisting of almond oil, argan oil, avocado oil, canola oil, coconut oil, corn oil, cottonseed oil, grapeseed oil, hazelnut oil, hemp seed oil, macadamia nut oil, oat bran oil, olive oil, palm oil, peanut oil, pistachio oil, rapeseed oil, rice bran oil, soybean oil, sesame oil, sunflower seed oil, walnut oil and mixtures thereof.

In an embodiment, the plant-based fermented dairy analogue comprises at most 12wt% sugar, preferably at most 10wt% sugar, more preferably at most 9wt% sugar. In a more preferred embodiment, the plant-based fermented dairy analogue comprises from 1.0 to 8wt% sugar, even more preferably 1.5 to 4wt% sugar.

In a preferred embodiment, the oat proteins of the plant-based fermented dairy analogue are derived from a liquid retentate comprising oat proteins, fermentable sugars, a hydrophilic liquid matrix and optionally a vegetable fat component.

In a more preferred embodiment, the liquid retentate is obtained by a process comprising different steps.

The process for obtaining the liquid retentate comprises a step of providing an oat mixture. The oat mixture may comprise an oat raw material, such as oat flour, defatted oat flour, oat flakes, or mixtures thereof. In one embodiment, the oat mixture comprises an oat flourthat may contain 10-15wt% proteins, 4-6wt% fat, 55-70wt% carbohydrates, and 8-11wt% fibers. The oat flour can have a TS of 90-95wt%. The oat mixture preferably comprises defatted oat flour, which can lead to a high oat protein recovery yield over the process. For example, the defatted oat flour may contain less than 4 wt% fat, preferably less than 3wt% fat. The oat raw material may be initially mixed with water to prepare the oat mixture. The oat mixture may have a total solids (TS) of from 10% to 25% before the subsequent membrane filtration, preferably from 10% to 15%. For example, the oat mixture can have a TS of 10%, 15%, 20%, or 25%. The mixture can be diluted to have a desirable TS before the membrane filtration step. The oat mixture preferably has a TS from 10% to 15% before the membrane filtration step, for example, 10% or 15%, preferably 10%.

The process for obtaining the liquid retentate further comprises a step of hydrolyzing the oat mixture with an enzyme or a combination of enzymes to obtain a hydrolyzed oat mixture. This enzymatic hydrolysis step is performed at a suitable temperature, for example, between about 60 °C and about 70 °C, preferably at about 60 °C. At the suitable temperature, the starch in the oat mixture starts the process of gelatinization. The temperature of this step is chosen based on the optimal temperatures for the activity of the enzyme(s) being used. The enzymatic hydrolysis step can be performed for a suitable period of time depending on factors such as the enzyme(s) used, enzyme concentration, and/or the conditions of the hydrolysis (time, temperature). In a preferred embodiment, the enzymatic hydrolysis step is performed for 30 minutes to 2 hours, more preferably for 45 minutes to 90 minutes, most preferably for 45 minutes to 75 minutes. For example, the enzymatic hydrolysis step can be performed for 30 minutes or 2 hours, preferably for 1 hour.

The enzyme can comprise at least one of amylase, amyloglucosidase, or β-glucanase. The enzyme may comprise amylase; a mixture of amylase and β-glucanase; a mixture of α-amylase and amyloglucosidase; or a mixture of amylase, β-glucanase, and amyloglucosidase. Combinations of enzymes can lead to a higher oat protein recovery yield over the process compared to when amylase is used alone. Enzymatic hydrolysis with β -glucanase activity is advantageous to reduce viscosity and to avoid blocking of the filtration membrane during the membrane filtration step. This activity may be found through a specific enzyme or through a side activity of amylases. Hence, in a preferred embodiment, the enzyme comprises β-glucanase and/or amylase with β-glucanase side activity. When the enzyme does not comprise β-glucanase, it comprises amylase with β-glucanase side activity. Especially, the enzyme may comprise amylase with β-glucanase side activity; a mixture of amylase and β-glucanase; a mixture of α-amylase with β-glucanase side activity and amyloglucosidase; or a mixture of amylase, β-glucanase, and amyloglucosidase. It may also comprise a mixture of amylase with β-glucanase side activity and β-glucanase or a mixture of amylase with β-glucanase side activity, β-glucanase, and amyloglucosidase.

In a preferred embodiment, the enzyme is free from protease or enzymes with protease main activity. For avoidance of doubt, the enzyme could have protease side activity. Indeed, it is advantageous that a substantial amount of oat proteins are not broken down into peptides. In particular, the major part of oat proteins should remain intact to be collected and concentrated in the retentate. If they are broken down into peptides, peptides would pass through the membrane during the membrane filtration step and would be collected in the permeate which also comprises undesirable compounds (e.g. carbohydrates). Moreover, without wishing to be bound by theory, the hydrolysis of oat proteins by protease would generate undesirable properties that would make the liquid retentate less suitable for food applications, in particular for plant-based fermented dairy analogue applications. For example, the hydrolysis of oat proteins may generate undesirable bitterness that may negatively impact the taste of the final plant-based fermented dairy analogue prepared with the liquid retentate.

The total amount of the enzyme used for hydrolyzing the oat mixture can be from 0.05wt% to 0.3wt%, preferably from 0.1wt% to 0.3wt%, more preferably from 0.1wt% to 0.2wt%, even more preferably from 0.15wt% to 0.25wt%, of the oat raw material. Preferably, the total amount of the enzyme used for hydrolyzing the oat mixture is 0.2wt% of the oat raw material. Lower dosages of enzymes may lead to lower oat protein recovery yields.

The enzyme(s) are added to hydrolyze the carbohydrate fraction, such as starch and/or fiber of the oat raw material. In particular, the enzyme(s) hydrolyze soluble fibers into shorter carbohydrates, including mono- or disaccharides. This step reduces the viscosity of the oat mixture to facilitate its processability and to avoid fouling during the membrane filtration step.

The process for obtaining the liquid retentate further comprises a step of optionally homogenizing the hydrolyzed oat mixture. This homogenization step can be applied to break down large particles present in the oat mixture after the hydrolysis step. The homogenization step can be applied at 60 °C. This step can lead to an increase in the oat protein recovery yield compared to a process where this step is not performed. The homogenization step can be applied at a temperature of 40 °C to 80 °C, preferably 50 °C to 70 °C, more preferably 55 °C to 65 °C, and most preferably at 60 °C. The homogenization step is preferably applied at a pressure of 200 bar followed by a pressure of 50 bar.

In an embodiment, the process may comprise an enzyme inactivation step of the hydrolyzed oat mixture in order to stop the enzyme(s) activity. Otherwise, the enzyme(s) may remain active in the final product, which may lead to food quality issues. The enzyme inactivation step can be applied at a temperature from about 90 to about 95 °C. This step can be applied for a time period of about 10-15 minutes. The process may further comprise a step of cooling the hydrolyzed oat mixture to about 20-60 °C after the inactivation of the enzyme. Preferably, the hydrolyzed oat mixture is cooled to a temperature of 60 °C.

The process for obtaining the liquid retentate further comprises a step of physically separating an insoluble material from the hydrolyzed oat mixture by centrifugation, decantation and/or sieving to form a soluble hydrolyzed oat mixture. High amounts of insoluble fiber can lead to extensive fouling during the membrane filtration step. Moreover, the removal of insoluble fiber enables to improve the solubility of the obtained liquid retentate. A good solubility is paramount for using the liquid retentate for plant-based fermented dairy analogue applications. In particular, this ensures to get plant-based fermented dairy analogues which are homogenous, and which have good texture and good stability. Thus, a physical separation step can then be applied to remove the insoluble material from the hydrolyzed oat mixture. Centrifugation, decantation, and/or sieving can be used for this step to obtain a soluble hydrolyzed oat mixture. When centrifugation is used, a pH adjustment is required before the physical separation step to avoid protein precipitation. This pH adjustment step is not required when decantation or sieving is used. Preferably, decantation is used for this step of physical separation of the insoluble materials. Decantation can lead to efficient removal of insoluble materials as well as a high oat protein recovery yield over the process. In some embodiments, the protein recovery rate from decantation can be about 80-90%.

In a preferred embodiment, the process does not comprise any additional decantation step after the physical separation step. Especially, when the physical separation step is performed by decantation, the process of the invention comprises a single decantation step. A decanter centrifuge is based on the principle of sedimentation in a liquid medium which is accelerated by a centrifugal force. The decanter distinguishes itself from other centrifuges by a continuous removal of the sediment by an axial screw conveyor. The difference in speed between the bowl and the conveyor is called the differential speed, which makes the solids move to the solids discharge. The differential speed impacts the residence time of the product and the dryness of the final cake that leaves the machine at the solids discharge. When compared to other liquid-solid separation techniques, the decanter centrifuge can often run at higher volumes in a continuous design. Moreover, the solids that leave the decanter centrifuge often have a lower water content due to the screw that presses the last bit of water out of the solids.

The pH of the hydrolyzed oat mixture, without adjustment, can be below 7, for example, of 6.3. If centrifugation is used, the pH value of the hydrolyzed oat mixture is first adjusted to an alkaline pH, such as a pH of 8, before centrifugation to increase protein solubility and subsequently to prevent protein precipitation during the centrifugation step. The pH before the centrifugation step can be between 7 and 10, preferably between 8 and 10. Lower pH values can also lead to a significant decrease in the oat protein recovery yield over the process when centrifugation is used, due to the low solubility of oat proteins at lower pH values. If decantation or sieving is used for this physical separation step, no pH adjustment is necessary. In particular, if decantation or sieving is used for this physical separation step, the retentate obtained after the subsequent membrane filtration step has a pH of 6.0 to 7.0, preferably of 6.2 to 6.6.

If the oat raw material comprises oat flakes, the insoluble material can be physically separated from the hydrolyzed oat mixture by sieving.

The soluble hydrolyzed oat mixture obtained from the physical separation step may have a TS of 10-25%. For example, the soluble hydrolyzed oat mixture can have a TS of 10%, 15%, 20%, or 25%. The soluble hydrolyzed oat mixture preferably has a TS from 10% to 15%, for example, 10% or 15%. If the TS of the soluble hydrolyzed oat mixture is above 15%, the soluble hydrolyzed oat mixture can be diluted to have a more preferable TS for the subsequent membrane filtration step.

The process for obtaining the liquid retentate further comprises a step of applying membrane filtration, preferably at a temperature from 50 °C to 60 °C, to the soluble hydrolyzed oat mixture using a membrane having molecular weight cut-offs (MWCO) greater than 100 kDa to obtain a liquid retentate.

The membrane filtration step is applied to the soluble hydrolyzed oat mixture to obtain a retentate and a permeate. Membrane filtration is a pressure driven process in which the feed solution, the solution to be concentrated or fractionated, is forced through the membrane. Two fractions are obtained by this process: a retentate, which corresponds to the retained liquid; and a permeate, which corresponds to the liquid passing through the membrane.

This membrane filtration step allows the concentration of large molecules, e.g., proteins and remaining large carbohydrates, which are retained in the retentate, and the removal of small molecules, e.g., hydrolyzed carbohydrates, that pass through the membrane and are then collected in the permeate.

The membranes used in this step preferably have large molecular weight cut-offs (MWCO)/pore sizes to ensure a high protein content in the retentate. The use of lower MWCOs can lead to excessive fouling during the membrane filtration process and, subsequently, to a significant decrease in the oat protein content in the final retentate. The MWCOs of the membranes used can be 100 kDa or greater, preferably between 100 kDa and 0.2 µm, more preferably greater than or equal to 500 kDa.

Flat sheets or spiral wound membranes can be used in this step. Different types of membrane materials can be used. For protein concentration applications, a hydrophilic and non-protein binding material is usually preferable. The membrane material used in the present process can be a hydrophilic, hydrophobic, and/or an inorganic material. In one embodiment, the membrane material is preferably ceramic. An adapted membrane material, such as ceramic, can significantly increase the protein content in the retentate.

The membrane filtration step can be carried out at a temperature greater than 50°C, preferably from 50°C to 60°C. Temperatures lower than 10°C may lead to excessive fouling due to high viscosity of the hydrolyzed oat mixture during the membrane filtration step and, subsequently, a lower oat protein recovery yield during the membrane filtration step. Temperatures between 10 and 50°C may cause microbiological growth. Using higher temperatures, e.g. 60 °C, can significantly increase the protein content in the retentate and are preferred in case the membrane material is not thermo-sensitive.

Different types of membrane filtration, such as microfiltration and ultrafiltration, can be used. Each membrane type has pores with different sizes.

In some embodiments, ultrafiltration can be used. "Ultrafiltration" is a membrane filtration technique using hydrostatic pressure to force a liquid through a semi-permeable membrane. Suspended solids and high molecular weight solutes are retained in ultrafiltration, while water and low molecular weight solutes cross the membrane. Ultrafiltration is used in industry and research to purify and concentrate solutions containing large molecular weight molecules (103 - 106 Da). Ultrafiltration allows an efficient and, at the same time, gentle separation of large molecular weight compounds. Any common type of ultrafiltration membrane may be used in the ultrafiltration, and suitable ultrafilters are commercially available, for example from Millipore Corp. and Desal Systems. Techniques by which ultrafiltration may be performed include flat, spiral, and hollow fiber techniques, for example. The ultrafiltration may be performed in various modes, such as dead-end, crossflow and backflush operating modes. The present disclosure is not limited to a specific embodiment of the ultrafiltration membrane, the ultrafiltration technique or the ultrafiltration mode.

In some embodiments, microfiltration can be used. "Microfiltration" is filtration that uses a membrane having a pore size range from 0.1 to 10 µm and for which pressurization is optional. The microfiltration can use membranes that are hollow fibers, a flat sheet, tubular, spiral wound, hollow fine fibers or track etched, for example. The present disclosure is not limited to a specific embodiment of the microfilter.

In an embodiment, the process for obtaining the liquid retentate does not comprise any step of applying ultrasound. In particular, the process for obtaining the liquid retentate does not comprise any ultrasonication step. Ultrasonication is undesirable as it comprises several drawbacks as mentioned above.

A retentate can be obtained after the membrane filtration step which is the liquid retentate. Thanks to the mild process, the liquid retentate contains highly techno-functional oat proteins.

The liquid retentate contains high content of oat proteins, which are concentrated by membrane filtration. In an embodiment, the liquid retentate can comprise at least 4wt% oat proteins, preferably from 4wt% to 10wt% oat proteins, more preferably from 4wt% to 8wt% oat proteins, most preferably 4wt% to 6wt% oat proteins.

In a further embodiment, the liquid retentate can also comprise 0-7wt.% fat, more preferably 2-7wt% fat. The fat content of the liquid retentate is the vegetable fat component of the liquid retentate.

In a further embodiment, the liquid retentate can comprise 5-20 wt%, preferably 5-15wt% of carbohydrates. For example, the liquid retentate can comprise about 13 wt% of carbohydrates. The liquid retentate can comprise 2-4 wt% of sugars. These sugars of the liquid retentate can comprise, preferably can consist of fermentable sugars, mostly maltose. In particular, the sugars of the liquid retentate consists of maltose. The liquid retentate can also comprise 0.5-2 wt% of total dietary fibers comprising (i) 0.5-1.5 wt% of insoluble fibers and (ii) up to 0.5 wt% of soluble fibers comprising β-glucans. The liquid retentate can have a TS of 20-40%, for example, 20-30%.

In a preferred embodiment, the liquid retentate, has a pH of 6.0 to 7.0, more preferably of 6.3 to 6.6. These pH ranges of the retentate ensure to preserve the techno-functionality of oat proteins. In particular, if the pH of the retentate is below these ranges, it may lead to the aggregation of the proteins which may negatively impact the techno-functionality of oat proteins. In this event, a plant-based fermented dairy analogue with a satisfactory texture and stability cannot be achieved.

The process results in a liquid retentate having a specific protein composition with highly techno-functional oat proteins, e.g. with high stability, solubility, gelation, emulsification, and foaming properties. The oat proteins in the liquid retentate can maintain their best performance due to the mild processing by membrane filtration. Due to its highly techno-functional oat proteins, the liquid retentate allows the preparation of plant-based fermented dairy analogues having a satisfactory texture, including a significant creaminess and having a stable texture, including low syneresis. Unlike oat protein ingredients of the prior art, the process results in a liquid retentate which enables the preparation of plant-based fermented dairy analogues which do not have an undesirable texture, i.e. excessively liquid or excessively thick.

In a preferred embodiment, due to the mild processing conditions for the preparation of the liquid retentate, the oat proteins of the liquid retentate are native. By "native", it is understood proteins which are not denatured. However, minor amounts of denatured proteins may be present in the liquid retentate. By "minor amounts of denatured proteins", it is understood that the amount of denatured proteins is less than 10wt%, preferably less than 5wt%, more preferably less than 2wt%, even more preferably less than 0.5% respective to the total amount of oat proteins in the liquid retentate. Preferably, the liquid retentate is free from denatured oat proteins.

In addition, the oat proteins of the liquid retentate are highly soluble. In particular, the oat proteins of the liquid retentate have a solubility of 83-86% from pH of 7 to pH of 11 in reverse osmose water.

Without wishing to be bound by theory, the native state and the high solubility of the oat proteins of the liquid retentate would participate in providing them with high techno-functionality for plant-based fermented dairy analogue applications. In particular, this would participate in allowing the preparation of a fermented dairy analogue applications having a homogenous and satisfactory texture, including a significant creaminess and having a stable texture, including low syneresis.

Where the oat proteins are derived from the liquid retentate, the hydrophilic liquid can consist of the hydrophilic liquid matrix of the liquid retentate, optionally in combination with water and/or plant-based milk alternative and/or plant-based cream alternative. In other words, the liquid retentate may be used as it is and not combined with other hydrophilic liquids to prepare the plant-based fermented dairy analogue. In this event, the hydrophilic liquid consists only of the hydrophilic liquid matrix of the liquid retentate. Alternatively, the liquid retentate may be combined with other hydrophilic liquids for sensory and nutritional purposes. It can also be done to standardize the amount of the different micronutrients within the liquid retentate through dilution. In this event, the hydrophilic liquid consists of the hydrophilic liquid matrix of the liquid retentate in combination with water and/or plant-based milk alternative and/or plant-based cream alternative.

In another embodiment, the vegetable fat component of the plant-based fermented dairy analogue, if any, may consist only of the vegetable fat component of the liquid retentate and/or the fermentation-derived organic acids may consist only of fermentation-derived organic acids originated from the fermentation of fermentable sugars of the liquid retentate.

In a further embodiment, the plant-based fermented dairy analogue is obtained by fermentation of the liquid retentate as it is after its preparation. In particular, the composition of the liquid retentate is not modified, for example by addition of one or more ingredient(s).

In a preferred embodiment, the hydrophilic liquid of the plant-based fermented dairy analogue comprises at least one plant-based cream alternative and said at least one plant-based cream alternative is coconut cream. In particular, the plant-based fermented dairy analogue comprises 5wt% to 20wt% of coconut cream, preferably 6wt% to 15wt% coconut cream. The coconut cream participates in providing a plant-based fermented dairy analogue with an enhanced texture.

In an embodiment, the plant-based fermented dairy analogue is free from any added texturizing agent. Examples of added texturizing agent include acacia gum, agar, alginate, carboxymethylcellulose, carrageenan, cellulose, gelatin, gellan, guar gum, locust bean gum, pectin, xanthan gum, starch, tara gum and mixtures thereof. It has been discovered that a plant-based fermented dairy product analogue having a homogenous, satisfactory and stable texture, including a significant creaminess and low syneresis, can be achieved even in the absence of any added texturizing ingredients. In particular, the highly techno-functional oat proteins allow the formation a satisfactory and stable texture upon fermentation without using any texturizing agent.

The plant-based fermented dairy analogue has a satisfactory texture mimicking the texture of fermented dairy products, such as yogurts. In an embodiment, the plant-based fermented dairy analogue has a viscosity of at least 160mPa.s, preferably of 160-55000mPa.s, preferably of 18000 to 55000mPa.s, more preferably 35000 to 40000mPa.s when measured with a Brookfield viscometer, using a cross-shaped probe reference T bar 93, at a rotation speed of 5 rpm and at a temperature of 8°C.

The plant-based fermented dairy analogue may further comprise fibers, minerals, vitamins, probiotics and/or prebiotics to improve its nutritional profile. The plant-based fermented dairy analogue may further also comprise fruit preparation, flavors and/or colorants to provide a targeted taste or to improve its visual aspect.

In a second aspect, the invention relates to a process for preparing a plant-based fermented dairy analogue. The plant-based fermented dairy analogue may be as described in the first aspect of the invention. Features, details and advantages of the plant-based fermented dairy analogue are provided in the first aspect of the invention. In a preferred embodiment, the process is a process for preparing a plant-based fermented dairy analogue according to the first aspect of the invention.

The process comprises a step (a) of providing a liquid retentate.

The liquid retentate comprises at least 4% oat proteins. Preferably, the liquid retentate comprises from 4wt% to 10wt% oat proteins, more preferably from 4wt% to 8wt% oat proteins, most preferably 4wt% to 6wt% oat proteins. The oat proteins are oat proteins inherently present in the liquid retentate.

In a preferred embodiment, the oat proteins of the liquid retentate are native. In an additional embodiment, the oat proteins of the liquid retentate have a solubility of 83-86% from pH of 7 to pH of 11 in reverse osmose water.

Without wishing to be bound by theory, as they are, *inter alia,* native and highly soluble, the oat proteins of the liquid retentate have good techno-functionality, in particular for plant-based fermented dairy analogue applications. Hence, upon fermentation, the oat proteins provide a plant-based fermented dairy analogue with a homogenous and satisfactory texture, including a good creaminess and with a stable texture, including low syneresis. The plant-based fermented dairy analogue does not have an undesirable texture which is excessively liquid or excessively thick.

The liquid retentate comprises fermentable sugars. Preferably, the liquid retentate can comprise 2-4 wt% of fermentable sugars. The fermentable sugars are fermentable sugars inherently present in the liquid retentate, mostly maltose inherently present in the liquid retentate. Preferably, the sugars of the liquid retentate consists essentially, preferably consists of maltose.

The liquid retentate comprises a hydrophilic liquid matrix. The hydrophilic liquid matrix is the hydrophilic matrix inherently present in the liquid retentate. The hydrophilic matrix of the liquid retentate may be as described in the first aspect of the invention. Features, details and advantages of the hydrophilic matrix of the liquid retentate are provided in the first aspect of the invention.

The liquid retentate optionally comprises a vegetable fat component. The vegetable fat component is the vegetable fat component inherently present in the liquid retentate. The vegetable fat component of the liquid retentate may be as described in the first aspect of the invention. Features, details and advantages of the vegetable fat component of the liquid retentate are provided in the first aspect of the invention.

The liquid retentate is a liquid retentate as described in the first aspect of the invention. Features, details and advantages of the liquid retentate are provided in the first aspect of the invention.

In a preferred embodiment, before step (a), the process comprises the preparation of the liquid retentate. In particular, the liquid retentate is prepared according to the process steps for preparing the liquid retentate provided in the first aspect of the invention.

In particular, the preparation of the liquid retentate comprises the step consisting of:
- providing an oat mixture,
- hydrolyzing the oat mixture with an enzyme or a combination of enzymes,
- optionally homogenizing the hydrolyzed oat mixture,
- physically separating an insoluble material from the hydrolyzed oat mixture by centrifugation, decantation and/or sieving to form a soluble hydrolyzed oat mixture;
- applying membrane filtration, preferably at a temperature from 50 °C to 60 °C, to the soluble hydrolyzed oat mixture using a membrane having molecular weight cut-offs (MWCO) greater than 100 kDa to obtain a liquid retentate.

Further features, details and advantages of the process steps for preparing the liquid retentate are provided in the first aspect of the invention.

The process for preparing a plant-based fermented dairy analogue comprises an optional step (b) of combining the liquid retentate with a hydrophilic liquid and/or fermentable sugar and/or vegetable fat component to prepare an oat-based liquid preparation comprising at least 2.0wt% oat proteins. The hydrophilic liquid, the vegetable fat component and the fermentable sugars are combined with liquid retentate, i.e. added to the liquid retentate. Therefore, they refer to hydrophilic liquid, vegetable fat component and fermentable sugars which are not inherently present in the liquid retentate. These different ingredients may be added to standardize the content of the nutrients, in particular the content of protein, within the oat-based liquid preparation. They may also be added to provide targeted flavor, sweetness, texture and/or nutritional properties to the final plant-based fermented dairy analogue. In addition, they may also be added to optimize the processing steps. For example, fermentable sugars may be added to ensure efficient fermentation step.

The hydrophilic liquid and the vegetable fat component are as described in the first aspect of the invention. Example of fermentable sugars which can be combined with the liquid retentate include agave syrup, brown sugar, coconut sugar, corn syrup, dextrose, fructose, glucose, honey, invert sugar, maltose, molasse, sucrose, and mixtures thereof. In a preferred embodiment, the fermentable sugar which is combined with the liquid retentate is sucrose.

In step (b), the liquid retentate may also be combined with plant proteins other than oat proteins. These plant proteins other than oat proteins may be inherently present in the hydrophilic liquid which is combined with the liquid retentate in step (b) and/or may come from a plant protein-containing ingredient which is different from the hydrophilic liquid which is combined with the liquid retentate. The plant protein-containing ingredient may be, for example, a plant protein concentrate, a plant protein isolate or a plant protein-containing flour. In a preferred embodiment, the process does not comprise a step of combining the liquid retentate with an ingredient comprising plant proteins other than oat proteins. In this specific embodiment, the process does not comprise a step of combining the liquid retentate with a hydrophilic liquid which comprises plant proteins other than oat proteins. In particular, in this embodiment, the liquid retentate may be combined with a hydrophilic liquid free from plant proteins, e.g. water. It may also be combined with a hydrophilic liquid comprising plant proteins consisting only of oat proteins, such as oat milk or oat cream.

In step (b), the liquid retentate may also be combined with other ingredients such as vitamins, minerals, salts and mixtures thereof. For example, the liquid retentate may be combined with buffer salts such as tricalcium phosphate and/or dipotassium phosphate.

The process for preparing the plant-based fermented dairy analogue further comprises a step (c) of homogenizing the liquid retentate of step (a) or the oat-based liquid preparation of step (b) to obtain a homogenized oat-based liquid preparation. The homogenization step is performed at a pressure of at least 50 bars. Preferably, the homogenization step is performed at a pressure of 50 bars to 700 bars, more preferably of 50 bars to 500 bars, even more preferably of 50 bars to 300 bars, most preferably of 100 bars to 300 bars. In one embodiment, the homogenization step is performed at a temperature ranging from 50°C to 70°C, preferably from 55°C to 65°C.

The process further comprises a step (d) of heat treating the oat-based liquid preparation at a temperature of 80 °C to 100 °C for 1 to 15 minutes to obtain a heat-treated oat liquid preparation. Preferably, the heat treatment is performed at a temperature ranging from 85°C to 95°C for a time ranging from 1 minutes to 7 minutes. Indeed, this heat treatment prevents any development of unwanted micro-organisms in the plant-based fermented dairy analogue, such as bacteria or moulds that may affect negatively the organoleptic properties of the plant-based fermented dairy analogue, or that may be pathogenic.

The heat treatment step may be performed prior or after the homogenization step. In a preferred embodiment, the heat treatment is performed after the homogenization step. Indeed, for hygienic and manufacturing purposes, it is preferable that the heat treatment is performed after the homogenization step. Indeed, it ensures the elimination of any unwanted micro-organisms that could be brought during the homogenization step, especially in the event where the homogenization step is performed with a non-aseptic homogenizing equipment. Moreover, in the event where the homogenization step is performed with a non-aseptic homogenizing equipment and is performed after the heat treatment step, it would require performing an additional heat treatment after the homogenizing step. Such an additional heat treatment makes the process more complex to be implemented. Moreover, it is desired to minimize the number of heat treatments as heat treatments may negatively impact the nutritional composition and sensory profile of the final product.

The process further comprises a step (e) of inoculating the heat-treated oat-based liquid preparation with a starter culture to obtain an inoculated oat-based liquid preparation. The starter culture is as described in the first aspect of the invention. Features, details and advantages of the starter culture are provided in the first aspect of the invention.

The process further comprises a step (f) of fermenting the oat-based liquid preparation until reaching a pH of less than 5.0 to obtain a plant-based fermented dairy analogue. Preferably, the fermentation step is performed until reaching a pH of less than 4.6. More preferably, the fermentation step is performed until reaching a pH ranging from 3.0 to 5.0, even more preferably from 3.5 to 4.6.

In a further embodiment, the fermentation step is performed at the temperature of optimal growth of the starter culture. The temperature of optimal growth of the starter culture may be easily determined by the person skilled in the art. For example, the fermentation step is performed at temperature ranging from 25°C and 45°C, preferably at a temperature of 35°C to 45°C.

The process further comprises an optional step of heat treating the plant-based fermented dairy analogue at a temperature of 75°C to 125°C for 2 to 90 seconds to obtain a shelf-stable plant-based fermented dairy analogue. Preferably, the heat treatment is performed at a temperature ranging from 100°C to 120°C for a time ranging from 2 seconds to 90 seconds. More preferably, the heat treatment is performed at a temperature ranging from 100°C to 120°C for a time ranging from 2 seconds to 60 seconds, preferably 2 seconds to 40 seconds.

This second heat treatment enables to considerably extend the shelf-life of the plant-based fermented dairy analogue. In particular, this enables to provide a shelf-stable plant-based fermented dairy product analogue which product may be stored under chilled or ambient conditions for several months without involving sanitary risks.

In an embodiment, the process of the invention does not involve any step of ultrasound treatment, in particular any ultrasonication step. The oat proteins of the liquid retentate and of the resulting plant-based fermented dairy analogue are not ultrasonicated. Ultrasonication is undesirable as it comprises several drawbacks as mentioned above.

A third aspect, the invention relates to a plant-based fermented dairy analogue obtainable by the process of the second aspect of the invention. The features and the advantages of the plant-based fermented dairy analogue of the first aspect of the invention also applies to the plant-based fermented dairy analogue of the third aspect of the invention.

Those skilled in the art will understand that they can freely combine all features of the present invention disclosed herein. In particular, features described for the product of the present invention may be combined with the process of the present invention and vice versa. Further, features described for different embodiments of the present invention may be combined.

Furthermore, where known equivalents exist to specific features, such equivalents are incorporated as if specifically referred in this specification. Further advantages and features of the present invention are apparent from the figures and non-limiting examples.

### EXAMPLES

### Example 1: Preparation of the liquid retentate

In an example process, BAN^{®} 480L (0.2% weight of oat flour) was mixed with water, and oat flour was gradually added to reach a TS of 15%. The mixture was heated and kept at 60°C for 1 h. The mixture was homogenized (200/50 bars, 60°C), heated to 90 °C, hold at 90°C for 10 min to inactivate the enzymes and cooled to 60°C. Then, the hydrolyzed oat mixture was passed through a decanter (6000 rpm drum, 10 rpm screw, 500 L/h). Membrane filtration was applied to the obtained soluble phase (also called light phase) with a ceramic membrane with a 0.14 µm MWCO and a membrane area of 7.6 m², at 60°C, with a flow of 1900-3300 L/h and a transmembrane pressure of about 1.8 bar.

Table 1 below provides the composition of the obtained liquid retentate.

**Table 1**

| Nutritional component | Content in the liquid retentate (%) |
|---|---|
| Dry matter (%) | 20.8 |
| Fat (%) | 2.8 |
| Protein (%) | 4.3 |
| CHO (%) | 13.0 |
| Sugar (%) | 3.5 |
| Fibers (%) | 0.7 |

### Example 2: Texture properties of plant-based yogurt analogues according to the invention with 4% oat proteins.

A plant-based yogurt analogue according to the invention with 4% oat proteins, hereinafter yogurt analogue A4%, was prepared with the liquid retentate of example 1.

In particular, the liquid retentate was mixed with sucrose and coconut cream in order to prepare an oat-based liquid preparation comprising 4wt% oat protein, 7wt% coconut cream and 2% sucrose. The oat-based liquid preparation was homogenized at a pressure of 200/50 bars and at a temperature of 60°C. The homogenized and heat-treated oat-based liquid preparation was then inoculated with a starter culture and fermented at 43°C until reaching a pH of around 4.6. The obtained plant-based yogurt analogue was then stored under refrigerated conditions, i.e., at 8°C.

A reference plant-based yogurt analogue with 4wt% oat proteins, hereinafter yogurt analogue B4%, was also prepared. It was prepared with a similar process as the one used for preparing the yogurt analogue A4%. The only difference is that a commercial liquid oat protein concentrate marketed by Frulact, i.e., Oatvita, was used instead of the liquid retentate of example 1.

Another reference plant-based yogurt analogue with 4wt% oat proteins, hereinafter yogurt analogue G4%, was also prepared. It was prepared with a similar process as the one used for preparing the yogurt analogue A4%. The only difference is that a commercial oat protein concentrate, i.e. PrOatein, containing 54% oat proteins marketed by Lantmännen, was used instead of the liquid retentate of example 1.

On a visual aspect, the yogurt analogue A4% prepared with the retentate of example 1 has a homogenous and satisfactory texture resembling to the texture of a standard dairy yogurt (cf. Figure 1). The assessment of the texture with a spoon showed that yogurt analogue A4% has a good, homogenous, and satisfatory texture (cf. figure 2). In particular, yogurt analogue A4% exhibits significant creaminess (cf. figure 2). No grains are visible within yogurt analogue A4% (cf. figure 2). In addition, yogurt analogue A4% appears stable and exhibits low, or even no syneresis (cf. figure 3). Yogurt analogue A4% was tasted. The tastings confirmed that yogurt analogue A4% has a satisfactory and homogenous texture and has a significant creaminess.

On the contrary, yogurt analogue B4% prepared with the commercial protein concentrate Oatvita exhibited an unsatisfactory and unpleasant texture. Yogurt analogue B has an excessively thick and clean-cut texture (cf. figure 4). In particular, it has a very low creaminess (cf. figure 4). The surface of the yogurt analogue B comprises undesirable cracks (cf. figure 4). Upon mixing with a spoon, yogurt analogue B exhibits inhomogeneous texture with undesirable grains which are visible to the naked eyes (cf. figure 5). In addition, yogurt analogue B does not appear stable and exhibits syneresis with accumulation of serum on the surface of the yogurt analogue (cf. figure 6). Yogurt analogue B was tasted. The tastings confirm that yogurt analogue B has an unpleasant texture, in particular grainy, not smooth and not creamy.

In addition, yogurt analogue G4% prepared with the commercial protein concentrate PrOatein exhibited an unsatisfactory texture (cf. figure 7). In particular, the texture is excessively liquid and has low creaminess. In particular, it is believed that the oat proteins are substantially denatured and are not able to form a network upon fermentation. Hence, they do not have the proper techno-functionality for plant-based fermented dairy analogue applications.

Hence, it appears that the oat proteins of the liquid retentate have good techno-functionality and provide plant-based yogurt analogues having substantial amount of oat proteins with good and stable texture, in particular with a significant creaminess. In particular, it is believed that the process used to prepare the liquid retentate provides a liquid concentrated with oat proteins having enhanced techno-functionalities compared to existing commercially available oat-based ingredients, in particular for plant-based fermented dairy analogue applications.

### Example 3: Texture properties of plant-based yogurt analogues according to the invention with 2.2% oat proteins.

A plant-based yogurt analogue according to the invention comprising 2.2wt% oat proteins, hereinafter yogurt analogue A2.2%, was prepared. The yogurt analogue was prepared as yogurt analogue A4% in example 2 but the liquid retentate was mixed with sucrose and coconut cream to have 2.2wt% oat protein, 7wt% coconut cream and 2% sucrose.

A reference plant-based yogurt analogue with 2.2.% oat proteins, hereinafter yogurt analogue B2.2%, was also prepared with the commercial oat protein concentrate Oatvita. The yogurt analogue was prepared as yogurt analogue B4% in example 2 but Oatvita was mixed with sucrose and coconut cream to have 2.2wt% oat proteins, 7wt% coconut cream and 2% sucrose.

The results were similar to the results of example 2. Yogurt analogue A2.2% has good, homogenous and stable texture resembling the texture of standard dairy yogurts. In particular, yogurt analogue A2.2% has significant creaminess, limited or no syneresis and homogenous texture without visible grains. On the contrary, yogurt analogue B2.2% exhibits an unsatisfactory and unpleasant texture. Yogurt analogue B2.2% has an excessively thick and clean-cut texture. In particular, it has a very low creaminess, significant syneresis and inhomogeneous texture with visible grains.

### Example 4: Texture properties of shelf-stable plant-based yogurt analogue according to the invention with 4% oat proteins

A shelf-stable plant-based yogurt analogue according to the invention with 4% protein, hereinafter yogurt analogue C4%, was prepared with the liquid retentate from example 1. Yogurt analogue C4% was prepared with the same process as yogurt analogue A4%. However, after the fermentation step, it comprised a further heat treatment step wherein the plant-based yogurt analogue was heat treated at 115°C for 5 seconds to obtain a shelf-stable plant-based yogurt analogue. After this additional heat treatment step, the obtained plant-based yogurt analogue was stored at 8°C.

A reference shelf-stable plant-based yogurt analogue with 4% oat proteins, hereinafter yogurt analogue D4%, was prepared with Oatvita oat protein concentrate. The process is the same as yogurt analogue C4%, except that Oatvita was used instead of the liquid retentate of example 1.

The texture properties of the yogurt analogues C4% and D4% were assessed after 14 days of storage at 8°C.

The yogurt analogue C4% exhibits a good, stable and homogenous texture. The yogurt analogue C4% has a significant creaminess and homogenous texture without visible grains (cf. figure 8). The yogurt analogue C4% exhibits higher creaminess than the yogurt analogue D4%. The texture of yogurt C4% appears stable despite the additional heat treatment after the fermentation step. In particular, the yogurt analogue C4% exhibits limited or even no syneresis.

The yogurt analogue D4% exhibits a texture characterized with substantially lower creaminess than yogurt analogue C4%.

Hence, the liquid retentate of example 1 allows the preparation of shelf-stable plant-based yogurt analogue which has a significant amount of oat proteins while having a good and stable texture, in particular characterized by a significant creaminess. In particular, the plant-based yogurt analogue has a satisfactory and stable texture despite the additional heat treatment applied after fermentation.

### Example 5: Protein, peptide composition and free amino group of the liquid retentate of example 1

The protein and peptide composition of the oat-based liquid preparations prepared with liquid retentate of example 1 and prepared with Oatvita was assessed respectively by LC-MS, in particular UHPC-HRMS and by LC-MS/MS, in particular UPLC-MS/MS before fermentation. In particular, two different set of samples were assessed:
- the first set of samples prepared with the liquid retentate of example 1, correspond to the homogenized and heat-treated oat-based liquid preparation obtained before inoculation in the preparation of the yogurt analogue A4% of Example 2.
- the second set of samples prepared with the Oatvita, correspond to the homogenized and heat-treated oat-based liquid preparation obtained before inoculation in the preparation of the yogurt analogue B4% of Example 2.

For the protein analysis by LC-MS, the Samples have been analyzed according to the described in the Journal of Dairy Science: Fuerer et al., Protein fingerprinting and quantification of 6-casein variants by ultra-performance liquid chromatography-high-resolution mass spectrometry (2020), J Dairy Sci. 103(2):1193-1207*.* In particular, the samples are dispersed/diluted in water at room temperature, denatured in guanidine, reduced by dithiothreitol (DTT), cleared by centrifugation, separated by reverse phase Ultra-High Pressure Liquid Chromatography (UHPLC) on a C4 column in presence of trifluoroacetic acid (TFA), and analysed by High-Resolution Mass Spectrometry (HRMS).

For the peptide analysis by LC-MS/MS, peptides have been recovered from the protein extract (prepared as described above) after precipitation with 80% methanol. The supernatant containing the peptides was evaporated and resuspended in 0.1% formic acid containing 2% acetonitrile. Peptide sequence identification was achieved by UPLC-MS/MS analysis on a Thermo Vanquish UPLC system coupled to an Orbitrap Elite mass spectrometer (Thermo Fisher Scientific). Peptides were separated on an Waters Acquity BEH C18 column (1 × 150 mm, 1.7 µm) using a binary solvent system (eluent A: 0.1% v/v formic acid, 2% v/v acetonitrile, in ultrapure LC-MS grade water; eluent B: 0.1% v/v formic acid, 80% v/v acetonitrile, in ultrapure LC-MS grade water). The gradient eluted from 2-50%B in 45 min at a flow rate of 75 µL/min. Total run time was 60 min. The mass spectrometer operated in a data-depended Top10 setup to acquire full-scan (MS1) and peptide fragment (MS2) spectra over the entire chromatographic run. The raw data was processed using the PEAKS Xpro software (Bioinformatics Solutions Inc., Canada) to identify peptide sequences using a protein database search strategy as well as de novo tandem MS spectra interpretation for small peptides (< 5 AA in length).

First, the protein analysis shows that the protein composition is different in samples prepared with the liquid retentate of example 1 and the samples prepared with Oatvita. In particular, the samples prepared with liquid retentate has a slightly more complex mix of proteins than the samples prepared with Oatvita (cf. figures 9 and 10).

The peptide analysis shows that peptides composition is also different in samples prepared with the liquid retentate of example 1 and Oatvita. The released peptides from different oat proteins have been identified, mainly Avenin, 12S seed storage globulin and peroxygenase. The avenin peptides are more abundant in samples prepared with Oatvita whereas peptides derived from 12S seed storage globulin seems to be more abundant in the samples prepared with the liquid retentate of example 1. The Avenin peptides from the sample prepared with Oatvita revealed more modifications compared to the samples prepared with the liquid retentate of example 1.

Hence, the above results suggest that the process of example 1 provides a liquid retentate with a unique and complex protein/peptide composition. This may explain the high techno-functionality of oat proteins of the liquid retentate of example 1 and the good texture, in particular significant creaminess achieved when it is used in yogurt analogue applications. In particular, the process of example 1 appears key to provide oat proteins with advantageous techno-functionalities and properties, in particular for plant-based fermented dairy analogue applications.

### Example 6: Preparation of 100% oat-based yogurt analogue

A 100% oat-based yogurt analogue with 4.3% oat proteins, hereinafter yogurt analogue F4.3%, was prepared. It was prepared according to the process of yogurt analogue 4%. The only difference is that the liquid retentate of example 1 was used as it is and was not combined with sucrose and coconut cream.

It resulted in a yogurt analogue with a good, homogenous and stable texture. The yogurt analogue has a significant creaminess, limited or no syneresis and homogenous texture without visible grains.

Hence, a yogurt analogue which is based on oat, which has a significant amount of oat proteins and which has a good texture, in particular significant creaminess, can be achieved.

Although the invention has been described by way of example, it should be appreciated that variations and modifications may be made without departing from the scope of the invention as defined in the claims.

## Claims

1. A plant-based fermented dairy analogue which has a pH of less than 5.0 and which comprises a hydrophilic liquid, at least 2.0 wt% oat proteins and optionally a vegetable fat component.

2. A plant-based fermented dairy analogue according to claim 1, which comprises from 2.0 wt% to 10 wt% oat proteins, preferably 3.0 wt% to 5.0 wt% oat proteins.

3. A plant-based fermented dairy analogue according to any one of the preceding claims, wherein the oat proteins are derived from a liquid retentate comprising oat proteins, fermentable sugars, a hydrophilic liquid matrix and optionally a vegetable fat component.

4. A plant-based fermented dairy analogue according to claim 3, wherein the liquid retentate is obtained by a process comprising the steps consisting of:
- providing an oat mixture,
- hydrolyzing the oat mixture with an enzyme or a combination of enzymes to obtain a hydrolyzed oat mixture,
- optionally homogenizing the hydrolyzed oat mixture,
- physically separating an insoluble material from the hydrolyzed oat mixture by centrifugation, decantation and/or sieving to form a soluble hydrolyzed oat mixture;
- applying membrane filtration, preferably at a temperature from 50 °C to 60 °C to the soluble hydrolyzed oat mixture using a membrane having molecular weight cut-offs (MWCO) greater than 100 kDa to obtain a retentate.

5. A plant-based fermented dairy analogue according to any one of claim 3 or 4, wherein the liquid retentate comprises at least 4 wt% oat proteins, preferably 5 wt% to 10 wt% oat proteins.

6. A plant-based fermented dairy analogue according to any one of claims 3 to 5, wherein the oat proteins of the liquid retentate are native and/or have a solubility of 83-86% from pH of 7 to pH of 11 in reverse osmose water.

7. A plant-based fermented dairy analogue according to claim 1 or 2, wherein the hydrophilic liquid consists of water and/or plant-based milk alternative and/or plant-based cream alternative.

8. A plant-based fermented dairy analogue according to any one of claims 3 to 7, wherein the hydrophilic liquid consists of the hydrophilic liquid matrix of the liquid retentate, optionally in combination with water and/or plant-based milk alternative and/or plant-based cream alternative.

9. A plant-based fermented dairy analogue according to any one of the preceding claims, wherein the plant-based fermented dairy analogue is a chilled plant-based fermented dairy analogue or a shelf-stable plant-based fermented dairy analogue.

10. A plant-based fermented dairy analogue according to any one of the preceding claims, wherein the hydrophilic liquid comprises at least one plant-based cream alternative and wherein the at least one plant-based cream alternative is coconut cream.

11. A plant-based fermented dairy analogue according to any one of the preceding claims, wherein the total protein content of the plant-based fermented dairy analogue comprises at least 60wt%, preferably at least 80wt%, more preferably at least 90wt% oat proteins.

12. A plant-based fermented dairy analogue according to any one of claims 1 to 9, wherein the proteins of the plant-based fermented dairy analogue consist only of oat proteins.

13. A plant-based fermented dairy analogue according to any one of the preceding claims, which is free from any added texturizing agent.

14. Process for preparing a plant-based fermented dairy analogue comprising the steps consisting of:
(a) providing a liquid retentate comprising at least 4% oat proteins, fermentable sugars, a hydrophilic liquid matrix and optionally, a vegetable fat component,
(b) optionally, combining the liquid retentate with a hydrophilic liquid and/or fermentable sugar and/or vegetable fat component to prepare an oat-based liquid preparation comprising at least 2.0wt% oat proteins,
(c) Homogenizing the liquid retentate of step (a) or the oat-based liquid preparation of step (b) to obtain a homogenized oat-based liquid preparation,
(d) Heat treating liquid the homogenized oat-based liquid preparation at a temperature of 80 °C to 100 °C for 1 to 15 minutes to obtain a heat-treated oat liquid preparation,
(e) Inoculating the heat-treated oat-based liquid preparation with a starter culture to obtain an inoculated oat-based liquid preparation,
(f) Fermenting the oat-based liquid preparation until reaching a pH of less than 5.0 to obtain a plant-based fermented dairy analogue,
(g) Optionally, heat treating the plant-based fermented dairy analogue at a temperature of 75°C to 125°C for 2 to 90 seconds to obtain a shelf-stable plant-based fermented dairy analogue.

15. Process according to claim 14, wherein the oat proteins of the liquid retentate are native and/or have a solubility of 83-86% from pH of 7 to pH of 11 in reverse osmose water.

16. Process according to any one of claim 14 or 15, wherein it comprises before step (a), the preparation of the liquid retentate, and the preparation of said liquid retentate comprising the steps consisting of:
- providing an oat mixture,
- hydrolyzing the oat mixture with an enzyme or a combination of enzymes,
- optionally homogenizing the hydrolyzed oat mixture,
- physically separating an insoluble material from the hydrolyzed oat mixture by centrifugation, decantation and/or sieving to form a soluble hydrolyzed oat mixture;
- applying membrane filtration, preferably at a temperature from 50 °C to 60 °C, to the soluble hydrolyzed oat mixture using a membrane having molecular weight cut-offs (MWCO) greater than 100 kDa to obtain a liquid retentate.

17. A plant-based fermented dairy analogue obtainable by the process according to any one of claims 14-16.
